# EUROPÄISCHE PATENTSCHRIFT

(11) **EP 2 883 010 B1**
(45) Veröffentlichungstag und Bekanntmachung des Hinweises auf die Patenterteilung: **10.08.2016**
(21) Anmeldenummer: 13728169.7
(22) Anmeldetag: 10.06.2013
(51) Int. Cl.: F24J 2/46

(54) **SONNENKOLLEKTORGEHÄUSE UND SONNENKOLLEKTOR**
SOLAR COLLECTOR HOUSING AND SOLAR COLLECTOR
BOÎTIER DE CAPTEUR SOLAIRE ET CAPTEUR SOLAIRE

(30) Priorität: 10.08.2012 DE 202012007717 U
(43) Veröffentlichungstag der Anmeldung: 17.06.2015
(73) Patentinhaber: Robert Bosch GmbH, 70442 Stuttgart (DE)
(72) Erfinder: KOSOK, Juergen, 48565 Steinfurt (DE)
(86) Internationale Anmeldenummer: PCT/EP2013/061878
(87) Internationale Veröffentlichungsnummer: WO 2014/023454

(56) Entgegenhaltungen:
- EP-A2- 1 043 549
- EP-A2- 1 469 259
- WO-A2-2008/136006
- DE-A1-102007 041 623
- US-A- 3 943 911

## Beschreibung

Die Neuerung betrifft ein Sonnenkollektorgehäuse nach dem Oberbegriff des Schutzanspruches 1. Ein solches Gehäuse wird in EP 1 043 549 offenbart. Ferner betrifft die Neuerung einen Sonnenkollektor mit einem derartigen Gehäuse.

Das Sonnenkollektorgehäuse ist in der Regel in Form eines flachen Quaders ausgebildet und weist eine bei Betriebsaufstellung etwa senkrecht zur Sonneneinstrahlrichtung ausgerichtete Oberseite und mindestens eine insbesondere rechtwinkelig zur Oberseite ausgerichtete Gehäusewand auf, in der mindestens eine Belüftungsöffnung ausgebildet ist. Der Sonnenkollektor wird oft mit einem Neigungswinkel zwischen etwa 30° und 60° zur Horizontalen aufgestellt, wobei auch Fassadenmontage (90°) und Flachdachmontage bekannt sind. Außer bei völlig flach aufgestellten Kollektoren fließt Regenwasser über die Oberseite und die Gehäusewand des Kollektorgehäuses ab.

Sonnenkollektoren dienen zur Umwandlung der im Sonnenlicht enthaltenen Energie in Wärme, die zur Erwärmung einer Wärmeträgerflüssigkeit, beispielsweise Wasser bzw. einem Glycol-Wasser-Gemisch, genutzt wird. Dafür ist im Sonnenkollektorgehäuse ein Absorber angeordnet, in dem oder an dem die Sonnenstrahlen absorbiert werden. Der Absorber wird dabei in der Regel von der Wärmeträgerflüssigkeit durchströmt, so dass eine Wärmeübertragung auf die Wärmeträgerflüssigkeit erfolgt. Die erwärmte Wärmeträgerflüssigkeit kann dann entweder direkt genutzt werden oder wird einem weiteren Wärmetauscher zugeführt, in dem eine Wärmeübertragung von der Wärmeträgerflüssigkeit beispielsweise auf Trinkwasser erfolgt.

Die Sonnenkollektorgehäuse dienen dabei zum einen zum Schutz des Absorbers vor Witterungseinflüssen und zum anderen zur Steigerung des Wirkungsgrades, in dem sie eine thermische Isolierung bereitstellen. Dabei ist es erforderlich, im Sonnenkollektorgehäuse mindestens eine Belüftungsöffnung vorzusehen, die für einen Austrag von Luftfeuchtigkeit und von gasförmigen Stoffen erforderlich ist, die zu einer Verschmutzung innerhalb des Sonnenkollektorgehäuses führen könnten und dadurch den Wirkungsgrad des Sonnenkollektors negativ beeinträchtigen würden. Beispielsweise kann es zu einer innenseitigen Verschmutzung einer transparenten Oberseite des Sonnenkollektorgehäuses kommen, durch die weniger Sonnenstrahlung zum Absorber gelangt.

Durch die Belüftungsöffnung kann allerdings auch eine Kontamination des Sonnenkollektorgehäuses erfolgen. So können beispielsweise Stoffe, die sich in der Luft befinden, über die Belüftungsöffnungen eingetragen werden und auf diesem Weg in das Sonnenkollektorgehäuse gelangen. Während der solaren Einstrahlung kann der Volumenstrom von Luft dabei Werte von ca. 50 l/h annehmen. Durch das Eindringen der trockenen Stoffe aus der Luft, die sich an von außen sichtbaren Flächen ablagern, wird die Leistungsfähigkeit des Sonnenkollektors beeinträchtigt. Gleichzeitig ergibt sich eine ungewünschte optische Verschmutzung.

Über Luftbewegungen, wie beispielsweise Wind, können Aerosole sowie Staub durch die Belüftungsöffnungen in das Innere des Sonnenkollektorgehäuses gebracht werden. Insbesondere in Küstennähe können die Aerosole zudem Salze aufweisen, was zu Schäden an einer Oberfläche des Absorbers oder an Beschichtungen führen kann.

Es wird also versucht, das Eindringen von Stoffen durch die Belüftungsöffnungen möglichst zu verhindern. Dafür ist es bekannt, eine Labyrinthdichtung vor den Belüftungsöffnungen anzuordnen. Durch diese Labyrinthdichtung wird das Eindringen von Staub und Aerosolen zumindest über einen gewissen Zeitraum reduziert. Allerdings sammeln sich die abgeschiedenen Stoffe in der Labyrinthdichtung, so dass möglicherweise nach einem gewissen Zeitraum die notwendige Belüftungsrate nicht mehr gewährleistet werden kann.

Zwar kann theoretisch durch Regenwasser, dass von der Oberseite des Sonnenkollektorgehäuses abläuft und über die Belüftungsöffnung strömt, eine Reinigung der Labyrinthdichtung erfolgen. Aber dies hat sich aber in der Praxis als wenig tauglich herausgestellt. Grund dafür ist wohl, dass insbesondere bei schwachem Regen nach längeren Trockenzeiten die auf der Oberseite des gesamten Kollektorgehäuses angesammelten Partikel durch das Wasser in die Labyrinthdichtung gespült werden, was zu einem dann besonders leichten Eindringen dieser Stoffe in das Kollektorgehäuse und/oder zu einer vollständigen Verstopfung führen kann.

Der Neuerung liegt daher die Aufgabe zu Grunde, die Nachteile des Standes der Technik zu beseitigen und ein Sonnenkollektorgehäuse anzugeben, bei dem auch über einen langen Zeitraum eine zuverlässige Belüftung über die Belüftungsöffnung gewährleistet ist.

Neuerungsgemäß wird diese Aufgabe mit den Merkmalen der Schutzansprüche 1 und 8 gelöst. Vorteilhafte Weiterbildungen sind den Unteransprüchen 2 bis 7 zu entnehmen.

Das Sonnenkollektorgehäuse ist dadurch gekennzeichnet, dass über die Oberseite zumindest im Bereich der Belüftungsöffnung ein rippenförmiges Leitelement mit einer Längserstreckung, Höhe und in einem Anstellwinkel übersteht, wobei die Längserstreckung, die Höhe und der Anstellwinkel derartig gewählt sind, dass von der Oberseite abfließendes Wasser bei schwachem Regen entlang des Leitelements vollständig an der Belüftungsöffnung vorbei leitbar ist, wobei das Leitelement bei starkem Regen zumindest teilweise überspülbar ist, so dass die Belüftungsöffnung bei starkem Regen durch einen Teil des Wassers erreichbar ist.

Durch diese Ausgestaltung wird erreicht, dass Verschmutzungen, die sich auf der Oberseite angesammelt haben, vom Wasser mitgenommen werden und vom Leitelement an der Belüftungsöffnung vorbei geleitet werden, ohne mit dieser in Berührung zu kommen. Insbesondere die Höhe und der Anstellwinkel müssen dabei auf eine Größe der Oberseite und eine durchschnittliche Niederschlagsmenge abgestimmt werden. Bei einer zu großen Höhe und/oder einem zu senkrechten Anstellwinkel gelangt zu selten, nämlich nur bei extrem starken Niederschlägen, Wasser über das Leitelement, das dann zur Reinigung der Belüftungsöffnung dient. Bei einer zu geringen Höhe und/oder einem zu geringen Anstellwinkel werden durch das Wasser zu viele Verschmutzungen über das Leitelement in die Belüftungsöffnung gespült, so dass keine Reinigung erfolgt, sondern im Gegenteil eine zusätzliche Verschmutzung der Belüftungsöffnung zu befürchten ist. Die Längserstreckung sollte mindestens so groß sein wie eine Längserstreckung der Belüftungsöffnung, kann aber problemlos auch deutlich größer sein. Die richtigen Abmessungen von Höhe, Anstellwinkel und gegebenenfalls Längserstreckung sind durch Versuche relativ leicht ermittelbar.

Bei schwächeren Niederschlägen liegen die von der Oberseite abgelösten Verschmutzungen in höherer Konzentration vor und werden durch das rippenförmige Leitelement von der Belüftungsöffnung weggelenkt. Bei stärkeren Niederschlägen und der dann entsprechend größeren Wassermenge, die von der Oberfläche abfließt, überspült ein Teil des Wassers, der Verschmutzungen in starker Verdünnung mitführt oder sehr bald nach Regenanfang gar keine Verschmutzung mehr aufweist, das Leitelement und gelangt damit zur Belüftungsöffnung. Dort können aus der Luft abgelagerte Stoffe durch das Wasser fortgeschwemmt werden und es erfolgt eine Reinigung der Belüftungsöffnung. Durch eine Lenkung des Wassers wird so eine Selbstreinigung mit Lenkungseffekt erzielt. Das insbesondere bei schwachem Regen und nach einer Trockenphase bereits verschmutzte Wasser wird durch das Leitelement von der Belüftungsöffnung abgehalten und erst bei größerer Wassermenge gelangt ein Teil des Wassers zu den Belüftungsöffnungen. Dieses Wasser kann als demineralisiert gelten und ist damit in der Lage, auch abgelagerte Salzmengen aus Aerosolen in Lösung zu bringen und damit auszuspülen. Es erfolgt also eine niederschlagsmengenabhängige Spülung und Reinigung im Bereich der Belüftungsöffnung, so dass ein Zusetzen der Belüftungsöffnung vermieden wird und ein störungsfreier Betrieb gewährleistet werden kann.

In einer bevorzugten Ausgestaltung ist das Leitelement an einer der Oberseite zugewandten Stirnfläche der Gehäusewand angeordnet. Das Leitelement kann also fest mit der Gehäusewand verbunden sein oder sogar einstückig mit der Gehäusewand ausgebildet werden. Dadurch ist es möglich, die übrige Oberseite transparent zu gestalten, ohne dass dies durch das Leitelement beeinträchtigt wird.

Vorzugsweise ist das Leitelement in Form einer Rippe zur Wasserlenkung ausgebildet und weist zwei gerade Schenkel auf, die zueinander in einem Winkel kleiner als 180° und größer als etwa 170° angeordnet sind, wobei die Schenkel etwa gleich lang sind und auf in Betriebsaufstellung des Kollektors untenliegende Ecken des Sonnenkollektorgehäuses zugerichtet sind. Das Leitelement ist also V-förmig ausgebildet, wobei der Scheitelpunkt des Winkels (die Spitze des V's) in Betriebsaufstellung nach oben entgegen der Wasserströmungsrichtung, also von der dazu gehörigen Gehäusewand weggerichtet ist. Dadurch erfolgt durch das Leitelement ein sicheres Ableiten des Wassers zu den Ecken der Gehäusewand und weg von den Belüftungsöffnungen.

Um das Eindringen von trockenen Stoffen aus der Luft und von Aerosolen zu vermeiden oder zumindest zu reduzieren, ist die Belüftungsöffnung vorteilhafterweise mit einer Abdeckung überdeckt, wobei zwischen der Gehäusewand und der Abdeckung ein Kanal ausgebildet ist, der an einem ersten, der Oberseite zugewandten Ende und einem zweiten Ende offen ist, wobei die Belüftungsöffnung in den Kanal mündet. Ein direktes Eindringen der Stoffe beziehungsweise Aerosole durch den Volumenstrom der Luft während der solaren Einstrahlung oder durch den bei Wind anstehenden Staudruck wird durch die Abdeckung verhindert. Durch den Kanal kann dennoch Wasser, das über das Leitelement strömt, zur Belüftungsöffnung gelangen und zu einer Selbstreinigung führen. Durch die am zweiten Ende vorgesehene Öffnung des Kanals gelangt das Wasser dann wieder ins Freie.

Dabei ist besonders bevorzugt, dass die Abdeckung gleichweit oder weiter als das Leitelement über die Oberseite übersteht. Das Überstehen bezieht sich dabei auf eine Erstreckung des Leitelements bzw. der Abdeckung in einer Richtung senkrecht zur Oberseite. Dadurch wird zumindest ein Teil des über das Leitelement strömenden Wassers in den Kanal geleitet. Die Betriebssicherheit wird somit erhöht.

Vorzugsweise bildet die Abdeckung eine Labyrinthdichtung für die Belüftungsöffnung. Damit wird das Eindringen von trockenen Stoffen aus der Luft und von Aerosolen sicher verhindert, wobei gleichzeitig eine Selbstreinigung durch das Wasser erfolgen kann. Bei geringen Niederschlägen wird das Wasser dann durch das Leitelement nicht nur an der Belüftungsöffnungen, sondern auch an der Labyrinthdichtung vorbeigeleitet. Ein Zusetzen der Labyrinthdichtung durch vom Wasser mitgeschwemmte Stoffe, die sich auf der Oberseite des Sonnenkollektorgehäuses angesammelt hatten, wird also vermieden. Erst bei stärkeren Niederschlägen wird das Leitelement überspült, wobei Wasser, welches wenn überhaupt Verschmutzungen nur noch in starker Verdünnung mitführt, zur Labyrinthdichtung gelangt. Dort vorhandene Ablagerungen können durch das Wasser dann entfernt werden. Damit erfolgt eine Reinigung der Labyrinthdichtung.

Die Oberseite kann ein transparentes Element, insbesondere aus Glas, aufweisen. Durch das transparente Element, das den größten Teil der Oberseite einnehmen sollte, gelangt Sonnenlicht in das Innere des Sonnenkollektorgehäuses und kann von einem Absorber aufgenommen werden.

Dabei hat insbesondere Glas den Vorteil, zum einen sehr durchlässig für die Sonnenstrahlen zu sein und andererseits gegenüber Wärmestrahlung relativ undurchlässig zu sein, so dass sich eine Steigerung des Wirkungsgrads eines Sonnenkollektors ergibt.

Vorzugsweise weist das Sonnenkollektorgehäuse eine Unterseite auf, in der mindestens eine Lüftungsöffnung insbesondere benachbart zur Gehäusewand ausgebildet ist. Dadurch kann durch die in der Gehäusewand ausgebildete Belüftungsöffnung eintretendes Wasser direkt wieder aus dem Sonnenkollektorgehäuse herauslaufen. Das Innere des Sonnenkollektorgehäuses wird dadurch trocken gehalten.

In einer bevorzugten Ausgestaltung weist das Sonnenkollektorgehäuse eine Quader-Form auf. Eine derartige Form des Sonnenkollektorgehäuses ist insbesondere für Flachkollektoren vorteilhaft. Dabei sind die Oberseite und die Unterseite parallel zueinander, wobei die Gehäusewände senkrecht zu der Unterseite und der Oberseite verlaufen.

Die Aufgabe wird auch durch einen Sonnenkollektor, der insbesondere als Flachkollektor ausgebildet ist, mit einem derartigen Sonnenkollektorgehäuse gelöst, wobei im Sonnenkollektorgehäuse ein Absorber angeordnet ist. Im Absorber erfolgt eine Umwandlung der durch die Sonneneinstrahlung eingebrachten Energie in Wärme und eine Übertragung auf eine Wärmeträgerflüssigkeit. Dabei ergeben sich die in Zusammenhang mit dem Kollektorgehäuse genannten Vorteile.

Die Zeichnung stellt ein Ausführungsbeispiel der Neuerung dar. Es zeigt:
- Fig. 1:: Ein Sonnenkollektorgehäuse in der Draufsicht und
- Fig. 2:: einen Querschnitt durch einen Sonnenkollektor.

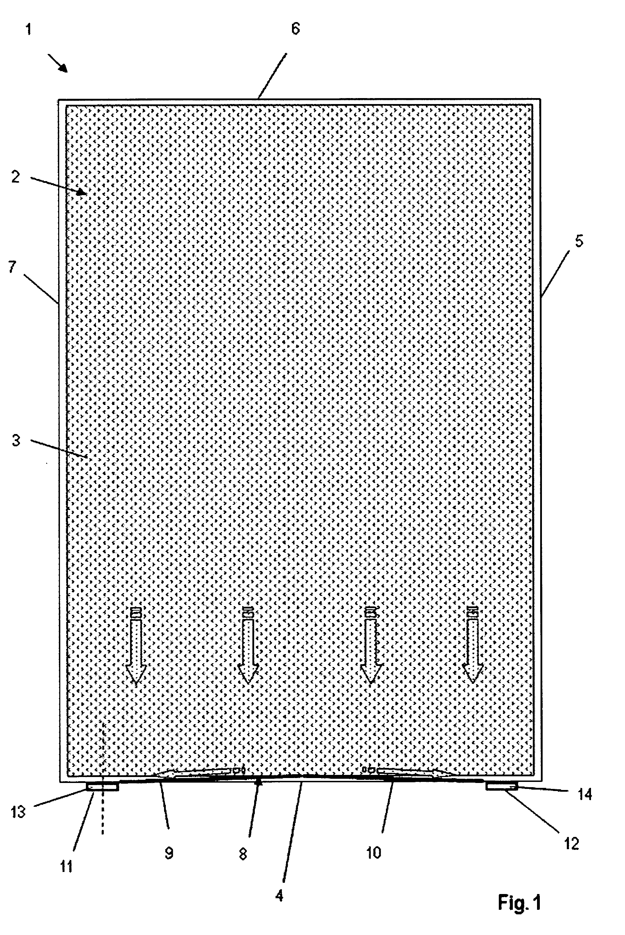

Fig. 1 zeigt ein Sonnenkollektorgehäuse 1 mit einer Oberseite 2, die ein transparentes Element 3, nämlich eine Abdeckscheibe aus Glas, aufweist. Das Sonnenkollektorgehäuse 1 ist quaderförmig ausgebildet und weist umfangsseitig vier Gehäusewände 4, 5, 6, 7 auf. An der Gehäusewand 4, die im montierten Zustand des Sonnenkollektorgehäuses 1 eine untere Gehäusewand darstellt, ist ein Leitelement 8 angeordnet, dass zwei Schenkel 9, 10 aufweist, die in einem Winkel von etwa 175° zueinander ausgerichtet sind. Das Leitelement 8 erstreckt sich dabei nahezu über die gesamte Breite des Sonnenkollektorgehäuses 1. Im Bereich von in Fig. 1 nicht dargestellten Belüftungsöffnungen der Gehäusewand 4 sind Abdeckungen 11, 12 angeordnet, wobei zwischen den Abdeckungen 11, 12 und der Gehäusewand 4 jeweils ein Kanal 13, 14 ausgebildet ist, der zur Oberseite 2 hin offen ist. Über Pfeile angedeutet ist die Strömungsrichtung von Wasser bei schwachem Regen. Das Wasser strömt entlang der Oberseite 2 des Sonnenkollektorgehäuses 1 in Richtung der Gehäusewand 4 und wird von dem Leitelement 8 nach außen abgelenkt, so dass es nicht über die von der Gehäusewand 4 mit der Oberseite 2 gebildete Kante strömen kann. Das Leitelement kann eine Höhe von wenigen Millimetern, beispielsweise von 3 bis 10 mm aufweisen, mit der es senkrecht über die Oberseite übersteht.

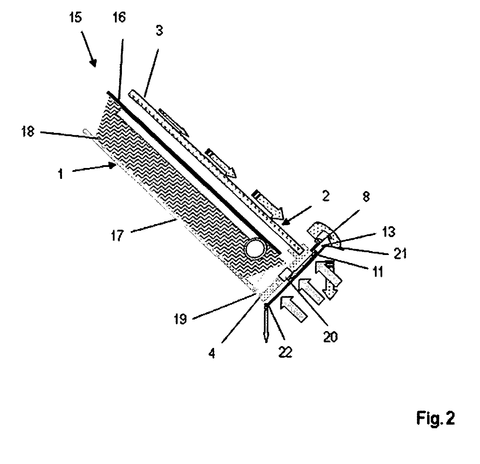

In Fig. 2 ist eine Schnittansicht eines Sonnenkollektors 15 mit dem Sonnenkollektorgehäuse 1 gezeigt. Im Sonnenkollektorgehäuse 1 ist dabei parallel zur Oberseite 2 beziehungsweise dem transparenten Element 3 ein Absorber 16 angeordnet. Zwischen dem Absorber 16 und einer Unterseite 17 befindet sich eine Isolationsschicht 18, die den Absorber 16 gegenüber der Unterseite 17 thermisch isoliert. In der Unterseite 17 ist direkt benachbart zur Gehäusewand 4 eine Lüftungsöffnung 19 ausgebildet. Wasser, das bei stärkeren Niederschlägen über das Leitelement 8 gelangt und in den Kanal 13 eindringt, kommt in den Bereich der Belüftungsöffnung 20, die in der Gehäusewand 4 ausgeformt ist. Dabei kann ein Teil des Wassers auch in das Gehäuseinnere des Sonnenkollektorgehäuses 1 eindringen, wobei es jedoch direkt durch die Lüftungsöffnung 19 wieder nach draußen gelangt.

Es ist zu erkennen, das der Kanal 13 nicht nur an seinem zur Oberseite 2 gerichteten ersten Ende 21 offen ausgebildet ist, sondern auch an seinem zweiten Ende 22. Dadurch ist ein sicheres Abfließen des Wassers durch den Kanal 13 gewährleistet.

Durch Pfeile angedeutet ist das bei stärkerem Regen von der Oberseite 2 abfließende Wasser. Ein Großteil des Wassers strömt über das Leitelement 8 und auch über die Abdeckung 11 hinweg und gelangt so gar nicht erst in den Kanal 13. Nur ein kleiner Teil des Wassers, das über das Leitelement 8 gelangt, strömt auch in den Kanal 13 und dient zur Reinigung der Labyrinthdichtung und der Belüftungsöffnung 20. Wasser, das bei schwächerem Regen an der Oberfläche der Oberseite entlang strömt und in der Regel relativ viele Verunreinigungen aufweist, wird durch das Leitelement 8 von den Belüftungsöffnungen 20 weggeleitet, so dass eine Verunreinigung der Belüftungsöffnungen 20 durch dieses Wasser nicht erfolgen kann.

Durch weitere Pfeile angedeutet ist der im Freien auftretende Winddruck. Es ist zu erkennen, dass durch die Abdeckung 11 die Belüftungsöffnung 20 vor diesen Winden geschützt wird. Dementsprechend wird eine direkte Verunreinigung durch Winde und insbesondere trockene Stoffe aus der Luft und durch Aerosole vermieden. Gleichzeitig wird ein Selbstreinigungseffekt erzielt.

Durch die Abdeckung kann dabei ein Labyrinth gebildet sein, das den Einfluss von Wind beim Eintrag von Luftfrachten in das Sonnenkollektorgehäuse reduziert. Dabei erfolgt eine Lenkung des Wassers, so dass ein Selbstreinigungseffekt für abgeschiedene Stoffe und Aerosole erzielt wird. Bei schwachem Regen und dementsprechend geringer Menge an Wasser wird das Wasser, das insbesondere nach einer Trockenphase relativ viele Verschmutzungen aufweisen kann, die sich auf der Oberseite des Sonnenkollektorgehäuses angesammelt hatten, durch das Leitelement von den Belüftungsöffnungen weggeleitet. Erst bei starkem Regen und entsprechend großer Menge an Wasser wird das Leitelement überströmt bzw. überspült, so dass ein Teil des relativ sauberen Wassers in den Bereich der Belüftungsöffnungen gelangt. Dieses Regenwasser ist in der Regel demineralisiert und kann dementsprechend nicht nur nichtlösbare Stoffe wegspülen, sondern auch abgelagerte Salze aus Aerosolen in Lösung bringen und ausspülen. Durch die V-förmige Ausgestaltung des Leitelements können dabei Montagetoleranzen ausgeglichen werden und eine gezielte Ablenkung des Wassers erreicht werden.

Durch die neuerungsgemäße Ausgestaltung wird also zum einen bereits das Eindringen von Aerosolen und Stoffen erschwert und zum anderen ein Selbstreinigungseffekt durch Regenwasser erzielt. Damit werden ein verbesserter Wirkungsgrad, eine verlängerte Lebensdauer und ein sauberer optischer Eindruck erreicht.

## Patentansprüche

1. Sonnenkollektorgehäuse (1) mit einer transparenten Oberseite (2) und mindestens einer insbesondere rechtwinklig zur Oberseite (2) ausgerichteten Gehäusewand (4), in der mindestens eine Belüftungsöffnung (20) ausgebildet ist,
**dadurch gekennzeichnet, dass** über die Oberseite (2) zumindest im Bereich der Belüftungsöffnung (20) ein rippenförmiges Leitelement (8) mit einer Längserstreckung, Höhe und in einem Anstellwinkel übersteht, wobei die Längserstreckung, die Höhe und der Anstellwinkel derartig gewählt sind, dass von der Oberseite (2) abfließendes Wasser bei schwachem Regen entlang des Leitelements (8) vollständig an der Belüftungsöffnung vorbei leitbar ist, wobei das Leitelement (8) bei starkem Regen zumindest teilweise überspülbar ist, so dass die Belüftungsöffnung (20) bei starkem Regen durch einen Teil des Wassers erreichbar ist.

2. Sonnenkollektorgehäuse nach Anspruch 1,
**dadurch gekennzeichnet, dass** das Leitelement (8) an einer der Oberseite (2) zugewandten Stirnfläche der Gehäusewand (4) angeordnet ist.

3. Sonnenkollektorgehäuse nach einem der vorhergehenden Ansprüche,
**dadurch gekennzeichnet, dass** das Leitelement (8) zwei gerade Schenkel (9, 10) aufweist, die zueinander in einem Winkel kleiner als 180° und größer als 170° angeordnet sind, wobei die Schenkel (9, 10) etwa gleich lang sind und auf Ecken des Sonnenkollektorgehäuses (1) zu gerichtet sind.

4. Sonnenkollektorgehäuse nach einem der vorhergehenden Ansprüche,
**dadurch gekennzeichnet, dass** die Belüftungsöffnung (20) mit einer Abdeckung (11, 12) überdeckt ist, wobei zwischen der Gehäusewand (4) und der Abdeckung (11, 12) ein Kanal (13, 14) ausgebildet ist, der an einem ersten, der Oberseite (2) zugewandten Ende (21) und einem zweiten Ende (22) offen ist, wobei die Belüftungsöffnung (20) in den Kanal (13, 14) mündet.

5. Sonnenkollektorgehäuse nach Anspruch 4,
**dadurch gekennzeichnet, dass** die Abdeckung (11, 12) gleich weit oder weiter als das Leitelement (8) über die Oberseite (2) übersteht.

6. Sonnenkollektorgehäuse nach Anspruch 4 oder 5,
**dadurch gekennzeichnet, dass** die Abdeckung (11, 12) eine Labyrinthdichtung für die Belüftungsöffnung (20) bildet.

7. Sonnenkollektorgehäuse nach einem der vorhergehenden Ansprüche,
**dadurch gekennzeichnet, dass** es eine Unterseite (17) aufweist, in der mindestens eine Lüftungsöffnung (19) insbesondere benachbart zur Gehäusewand (4) ausgebildet ist.

8. Sonnenkollektor, insbesondere Flachkollektor mit einem Sonnenkollektorgehäuse (1) nach einem der vorhergehenden Ansprüche, wobei im Sonnenkollektorgehäuse ein Absorber (16) angeordnet ist.

## Claims

1. Solar-collector housing (1) having a transparent upper side (2) and at least one housing wall (4), which is oriented in particular at right angles in relation to the upper side (2) and in which at least one ventilation opening (20) is formed, **characterized in that** a rib-like directing element (8) projects, by way of a longitudinal extent and height and at a positioning angle, beyond the upper side (2), at least in the region of the ventilation opening (20), wherein the longitudinal extent, the height and the positioning angle are selected such that, in the case of light rain, all the water which flows off from the upper side (2) can be directed along the directing element (8) and past the ventilation opening, wherein, in the case of heavy rain, at least some water can wash over the directing element (8), and therefore, in the case of heavy rain, some of the water can reach the ventilation opening (20).

2. Solar-collector housing according to Claim 1, **characterized in that** the directing element (8) is arranged on an end surface of the housing wall (4) which is directed towards the upper side (2).

3. Solar-collector housing according to either of the preceding claims,
**characterized in that** the directing element (8) has two rectilinear limbs (9, 10), which are arranged in relation to one another at an angle of smaller than 180° and greater than 170°, wherein the limbs (9, 10) are of approximately equal length and are directed towards corners of the solar-collector housing (1).

4. Solar-collector housing according to one of the preceding claims,
**characterized in that** the ventilation opening (20) is covered over by a covering (11, 12), wherein the housing wall (4) and the covering (11, 12) have formed between them a channel (13, 14), which is open at a first end (21), directed towards the upper side (2), and a second end (22), wherein the ventilation opening (20) opens out into the channel (13, 14).

5. Solar-collector housing according to Claim 4,
**characterized in that** the covering (11, 12) projects beyond the upper side (2) to the same extent as, or to a greater extent than, the directing element (8).

6. Solar-collector housing according to Claim 4 or 5,
**characterized in that** the covering (11, 12) forms a labyrinth seal for the ventilation opening (20).

7. Solar-collector housing according to one of the preceding claims,
**characterized in that** it has an underside (17), in which at least one vent (19) is formed in particular adjacent to the housing wall (4).

8. Solar collector, in particular flat-plate collector, having a solar-collector housing (1) according to one of the preceding claims, wherein an absorber (16) is arranged in the solar-collector housing.

## Revendications

1. Boîtier de collecteur solaire (1) comprenant un côté supérieur transparent (2) et au moins une paroi de boîtier (4) orientée notamment à angle droit par rapport au côté supérieur (2), dans laquelle est réalisée au moins une ouverture de ventilation (20), **caractérisé en ce qu'**un élément conducteur en forme d'ailettes (8) dépasse avec une étendue longitudinale, une hauteur et suivant un angle d'inclinaison, au-delà du côté supérieur (2) au moins dans la région de l'ouverture de ventilation (20), l'étendue longitudinale, la hauteur et l'angle d'inclinaison étant choisis de telle sorte que l'eau s'écoulant depuis le côté supérieur (2) en cas de pluie légère puisse être conduite le long de l'élément conducteur (8) complètement devant l'ouverture de ventilation, l'élément conducteur (8), en cas de fortes pluies, pouvant être au moins en partie inondé par l'écoulement d'eau de sorte que l'ouverture de ventilation (20) puisse être atteinte par une partie de l'eau en cas de fortes pluies.

2. Boîtier de collecteur solaire selon la revendication 1, **caractérisé en ce que** l'élément conducteur (8) est disposé au niveau d'une face frontale de la paroi de boîtier (4) tournée vers le côté supérieur (2).

3. Boîtier de collecteur solaire selon l'une quelconque des revendications précédentes, **caractérisé en ce que** l'élément conducteur (8) présente deux branches droites (9, 10) qui sont disposées l'une par rapport à l'autre suivant un angle inférieur à 180° et supérieur à 170°, les branches (9, 10) étant approximativement de même longueur et étant orientées vers les coins du boîtier de collecteur solaire (1).

4. Boîtier de collecteur solaire selon l'une quelconque des revendications précédentes, **caractérisé en ce que** l'ouverture de ventilation (20) est recouverte avec un recouvrement (11, 12), un canal (13, 14) étant réalisé entre la paroi de boîtier (4) et le recouvrement (11, 12), lequel est ouvert au niveau d'une première extrémité (21) tournée vers le côté supérieur (2) et au niveau d'une deuxième extrémité (22), l'ouverture de ventilation (20) débouchant dans le canal (13, 14).

5. Boîtier de collecteur solaire selon la revendication 4, **caractérisé en ce que** le recouvrement (11, 12) dépasse de la même distance ou d'une distance supérieure à l'élément conducteur (8) au-delà du côté supérieur (2).

6. Boîtier de collecteur solaire selon la revendication 4 ou 5, **caractérisé en ce que** le recouvrement (11, 12) forme un joint à labyrinthe pour l'ouverture de ventilation (20).

7. Boîtier de collecteur solaire selon l'une quelconque des revendications précédentes, **caractérisé en ce qu'**il présente un côté inférieur (17) dans lequel est réalisée au moins une ouverture de ventilation (19), en particulier adjacente à la paroi de boîtier (4).

8. Collecteur solaire, en particulier collecteur plat comprenant un boîtier de collecteur solaire (1) selon l'une quelconque des revendications précédentes, un absorbeur (16) étant disposé dans le boîtier de collecteur solaire.
